# EUROPEAN PATENT SPECIFICATION

(11) **EP 2 988 132 B1**
(45) Date of publication and mention of the grant of the patent: **01.07.2020**
(21) Application number: 13882243.2
(22) Date of filing: 23.09.2013
(51) Int. Cl.: G01N 35/00, G01N 35/02

(54) **AUTOMATIC ANALYSIS DEVICE AND ANALYSIS METHOD AND ANALYSIS SYSTEM THEREFOR**
AUTOMATISCHE ANALYSEVORRICHTUNG SOWIE ANALYSEVERFAHREN UND ANALYSESYSTEM DAFÜR
DISPOSITIF D'ANALYSE AUTOMATIQUE, PROCÉDÉ D'ANALYSE ET SYSTÈME D'ANALYSE ASSOCIÉS

(30) Priority: 16.04.2013 CN 201310132098
(43) Date of publication of application: 24.02.2016
(73) Proprietor: Shenzhen Mindray Bio-Medical Electronics Co., Ltd., Shenzhen, Guangdong 518057 (CN)
(72) Inventor: ZHANG, Zhen, Shenzhen Guangdong 518057 (CN); ZHOU, Peng, Shenzhen Guangdong 518057 (CN); WANG, Jun, Shenzhen Guangdong 518057 (CN); XIE, Chuanfen, Shenzhen Guangdong 518057 (CN)
(74) Representative: KIPA AB
(86) International application number: PCT/CN2013/083960
(87) International publication number: WO 2014/169573

(56) References cited:
- WO-A1-2007/013960
- WO-A2-2006/060214
- CN-A- 1 963 527
- CN-A- 101 266 255
- CN-A- 101 452 004
- US-A1- 2005 220 671
- US-A1- 2009 017 491
- US-A1- 2009 308 183

## Description

### FIELD

The present application relates to automatic analysis device, and particularly, to an automatic analysis device which can make a target to be analyzed illuminates.

### BACKGROUND

An immunity analyzer is usually used to detect a number of target analytes of blood, urine, or the other body fluid in clinical laboratories. The immunity analyzer needs to support a number of immunity reaction modes, such as a competition method, a sandwich method, an indirect method, a capture method, etc. The immunity analysis usually includes a radioimmunoassay (RIA), a euzymelinked immunosorbent assay (ELISA), and a luminescence immunoassay (LIA). The luminescence immunoassay becomes a major technology used in a clinical immunoassay analysis due to advantages of environmental protection, a high detecting sensitivity, and a wide detecting range. The luminescence immunoassay is a new labeled immunoassay technology for detecting a trace antigen or antibody by combing a luminescence analysis with an immunoreaction. Take one step sandwich method as example, main principles of the luminescence immunoassay include following steps. A number of reagents corresponding to a target component are prepared in a sample. The target component is defined as a component of the sample to be detected. The reagents can be a magnetic bead reagent and a labeling reagent. The magnetic bead reagent is composed of a number of magnetic beads coated by antibodies/antigens corresponding to the target component. The labeling reagent is composed of antibodies labeled by a specified mark. The different reagents are correspondingly received in a number of different reagent containers or a number of different cavities in a same reagent container. A reactive solution of the sample and the reagent are acquired by agitating the sample successively with the reagents. A reactive complex is formed in the reactive solution by an incubation reaction under determined conditions. The other components of the sample and the reagents not reacting in the reactive solution is removed by use of a Bound-free technology (B/F). A signal reagent is added in the reactive solution. The signal reagent reacts with the specified mark on the reactive complex to illuminate.

A luminescence immunity analyzer usually employs the following conventional test modes corresponding to different characters of immunoreactions mode of the target component.

### (1) one step and one separation test mode

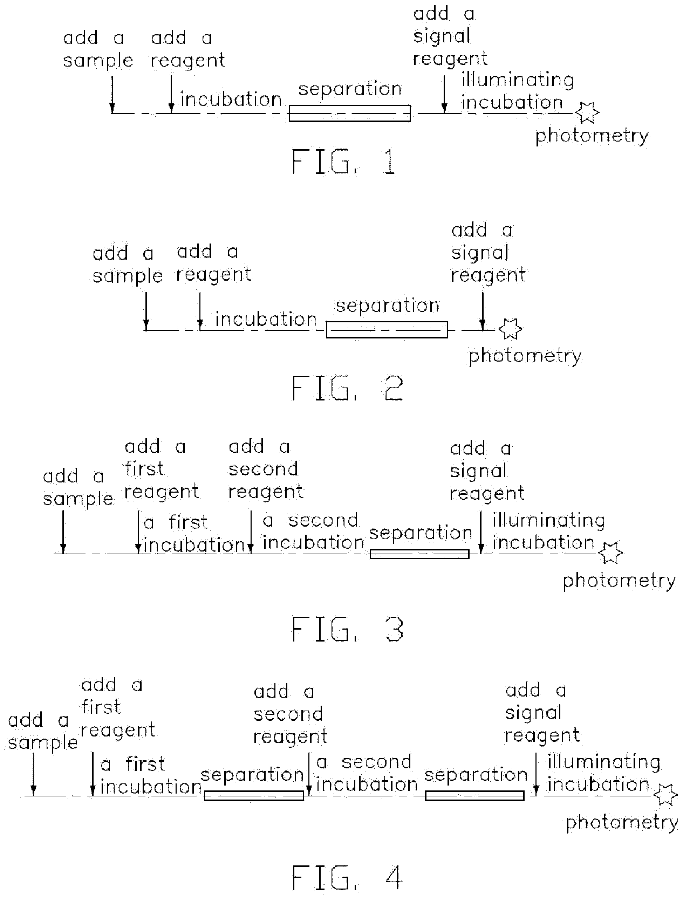

FIG. 1 illustrates the one step and one separation test mode, which is the simplest test mode, means the test only needs to employ one kind of reagent. The sample and the reagent are filled in a reaction container to form the reactive solution. The reactive solution is agitated and takes the incubation reaction for a first predetermined duration in a first stationary temperature. And then, the other components of the sample and the rest of the reagents not reacting in the reactive solution is separated from the reactive solution and removed by use of the bound-free technology. Finally, the signal reagent is filled in the reactive solution to incubate for a second predetermined duration in a second stationary temperature and then illuminated. The illumination of the reactive solution is measured to detect the target component. FIG. 2 illustrates the other test mode; the illumination of the reactive solution can be measured directly without incubation. For example, the test mode based on electrochemical luminescence or flash type chemical luminescence.

### (2) two steps and one separation test mode

FIG. 3 illustrates the sample and a reagent (named a first reagent, which may include several groups of compositions) are filled in the reaction container and agitated to form the reactive solution. The reactive solution takes the first incubation reaction for the first predetermined duration in the first stationary temperature (named a first incubation). And then, a reagent (named a second reagent, may include several groups of compositions) is filled in the reaction container again and agitated with the reactive solution. The reactive solution takes a second incubation reaction for the second predetermined duration in the second stationary temperature (named a second incubation). The other components of the sample, the rest of the first reagent, and the rest of the second reagent not reacting in the reactive solution is separated from the reactive solution and removed after the second incubation reaction. Thereafter, the signal reagent is filled in the reactive solution to incubate for a third predetermined duration in a third stationary temperature, and then the reactive solution illuminate. The illumination of the reactive solution is measured to detect the target component. As mentioned above, in the other test mode, the illumination of the reactive solution can be measured directly with no incubation.

### (3) two steps and two separations test mode

FIG. 4 illustrates the sample and a reagent (named a first reagent, which may include several groups of compositions) are filled in the reaction container and agitated to form the reactive solution. The reactive solution takes the first incubation reaction for the first predetermined duration in the first stationary temperature and then the other component of the sample and the rest of the first reagent not reacting in the reactive solution is separated from the reactive solution and removed. Later, the second reagent is filled in the reaction container and agitated with the reactive solution. The reactive solution takes the second incubation reaction for the second predetermined duration in the second stationary temperature. The rest of the second reagents not reacting in the reactive solution is separated from the reactive solution and removed after the second incubation reaction. Thereafter, the signal reagent is filled in the reactive solution after the separation to incubate a third predetermined duration in a third stationary temperature and then illuminated. The illumination of the reactive solution is measured to detect the target component. As mentioned above, in the other test mode, the illumination of the reactive solution can be measured directly without incubation.

Other steps besides the conventional test steps mentioned above are not listed in the description, for example, a sample pre-treatment step, a sample pre-dilution step, and three-step measurement.

The luminescence immunity analyzer can be classified as single mode and multi-modes according to a flexibility of the incubating duration and the test steps. The single mode luminescence immunity analyzer transports the reaction container to different executing stations via a fixed transport of an incubation unit. The fixed transport means that a transport distance or a step increment of the incubation unit in each periodic time period is invariable and does not change with the predetermined incubating duration. Thus, the single mode luminescence immunity analyzer is only available for a fixed combination of several test steps and several kinds of invariable incubations, for example, the one step and one separation test mode or two steps and two separations test mode. The incubation duration can be several different time periods or an integral multiple of a fixed time period, such as 15 minutes, 30 minutes, or 45 minutes etc. Thus, the incubation unit can transport the reaction container in the fixed step increment some times to match the incubation duration and deliver the reaction container to the executing station performing the specific operation after the incubation by setting a logic of the incubation transport. The multi-modes luminescence immunity analyzer can be available for flexible combinations of several test steps and variable incubating duration. For example, the flexible combinations of the extraordinary test steps and the conventional test steps. The incubating duration setting can be adjusted from several seconds to a few minutes, such as 15 seconds, 6 minutes, 10.5 minutes, 60 minutes, etc. The incubation duration can be flexible set. The single-mode luminescence immunity analyzer is lack of flexibility and the analysis mode of the single-mode luminescence immunity analyzer is limited. The incubation duration cannot be adjusted according to test target, which decreases an analysis capability or a test flux of some test target. The multi-modes luminescence immunity analyzer can adjust the test steps and the incubating duration according to the target component, which is more convenient than the single mode luminescence immunity analyzer.

The incubating duration depends on the target component. In use, the multi-modes luminescence immunity analyzer transports the reaction container to different executing stations via a self-adaptive transport of the incubation unit. The self-adaptive transport means that the transport distance or a step increment of the incubation unit in each periodic time period can be varied with the target component. The executing stations may include, but are not limited to, a sample injection station, a reagent injection station, a reaction container move in station, a reaction container move out station, and a detecting station. The executing stations are located along a transport track of the reaction container in predetermined interval to perform specific operation to the reaction container. In multi-sample analysis, when the incubation unit transports a target reaction container to the specific executing station via the self-adaptive transport, the other reaction containers may not arrive at the executing stations which can perform appropriate operation. The other reaction containers cannot be treated by the executing stations simultaneously with the target reaction container. Such that, the incubation unit needs a lot of self-adaptive transports to deliver the reaction container to accomplish a serial of operations performed by the different executing stations. The inefficiency of this serial fashion test mode adversely limits a test flux of the luminescence immunity analyzer.

US 2009/0308183 A1 discloses a clinical analyzer, which includes a cuvette carrier that is moved in a manner to provide flexible assay timing and variable incubation periods.

### SUMMARY

The present application provides an automatic analysis device, an analysis method, an analysis system therefore, which can both execute concurrent operation and satisfy a requirement of different incubation times, and balance the test flux and the analysis capability. The features of the automatic analysis device, the analysis method, and the analysis system according to the present invention are defined in the independent claims, and the preferable features according to the present invention are defined in the dependent claims.

### BRIEF DESCRIPTION OF THE DRAWINGS

The present disclosure is illustrated by way of embodiments and accompanying drawings.
FIG. 1 is a schematic flowchart of one step and one separation test mode of a luminescence immunity analysis.
FIG. 2 is the other schematic flowchart of one step and one separation test mode of a luminescence immunity analysis.
FIG. 3 is a schematic flowchart of two steps and one separation test mode of a luminescence immunity analysis.
FIG. 4 is a schematic flowchart of two steps and two separations test mode of a luminescence immunity analysis.
FIG. 5 is a schematic diagram of an embodiment of an automatic analysis device.
FIG. 6 is a block diagram of an embodiment of an analysis system of the automatic analysis device of FIG. 5.
FIG. 7 is a flowchart of an embodiment of a component analysis method of the automatic analysis device of FIG. 5.
FIG. 8 is a diagrammatic view of an embodiment of an incubation unit.
FIG. 9 is a sequence chart of an embodiment of a transport period of the incubation unit of FIG. 8 in accordance with one step test mode.
FIG. 10 is a schematic diagram illustrates a location relationship of a number of reaction container on the incubation unit after a regular transport.
FIG. 11 is a schematic diagram illustrates a location relationship of a number of reaction container on the incubation unit after a self-adaptive transport.
FIG. 12 is a flowchart of an embodiment of a component analysis method of one reaction container in accordance with a one step test mode.
FIG. 13 is a diagrammatic view of the other embodiment of the incubation unit.
FIG. 14 is a diagrammatic view of another embodiment of the incubation unit.
FIG. 15 is a flowchart of the other embodiment of a component analysis method of one reaction container in accordance with a one step test mode.
FIG. 16 is a flowchart of another embodiment of a component analysis method of one reaction container in accordance with a one step test mode.
FIG. 17 is a sequence chart of an embodiment of a transport period of the incubation unit of FIG. 8 in accordance with two steps test mode.
FIG. 18 is a sequence chart of the other embodiment of a transport period of the incubation unit of FIG. 8 in accordance with one step test mode.

### DETAILED DESCRIPTION

There is at least one executing station defined on a transport track of an incubation unit to provide an operation position for a reaction container. In order to indicate a relative position of each executing station, a position coordinate system is defined. The position coordinates (hereafter coordinates for short) of the position coordinate system correspond to the reaction containers on the incubation unit one by one when the incubation unit remains stationary. There are a number of operation mechanisms set around the incubation unit. The operation mechanisms are controlled to perform a corresponding operation to the reaction container when the incubation unit transports the reaction container to the executing station corresponding to the operation mechanism. If a transport interval M is less than a total number N of the reaction containers on the incubation unit and cannot be exactly divided by N, each reaction container can pass through all of the coordinates (that is can pass through all of the executing stations) when the incubation unit is transported N times of the predetermined transport interval M. In an embodiment of this disclosure, the operations of the automatic analysis device are classified as a number of regular operations and a number of self-adaptive operations. The regular operation is defined as the operation performed during a process in which the incubation unit transports the reaction containers to pass through all the coordinates. For example, a move-in operation to move the reaction container on the incubation unit, a photometry operation, etc. However, because special requirement, some operations cannot be performed during the process in which the reaction containers pass through all the coordinates, these operations are called the self-adaptive operations. The self-adaptive operations, for example, can be the operations performed immediately after the flexible incubation time of a sample to be detected. The transport distance covered by the incubation unit before the self-adaptive operation is variable based on the flexible incubation time. In a detailed immunoassay analysis, it is hope that the incubation time of a reactive solution is usually variable, that is set according to a specific test mode. The transport distance does not have to be an integral time of the step increment. The operations performed after the incubation is called the self-adaptive operation. For example, a move-out operation performed after the incubation to move the reaction container out of the incubation unit and a second reagent injecting operation to add the second reagent in the reactive solution. The self-adaptive operation also can be the special operation performed according to some situations. For example, the second reagent injecting operation or the move-out operation to move the reaction container needs to be agitated from the incubation unit, and so on.

A transport period is also defined in the present disclosure. Each transport period includes at least one regular transport sub-period in which the incubation unit transports the reaction containers a first transport distance and at least one self-adaptive sub-period in which the incubation unit transports the reaction containers a second transport distance. Each transport sub-period includes a transport duration and a stop duration. A number of the regular transport sub-period and the self-adaptive transport sub-period is flexible set according to the configuration of the automatic analysis device and the test mode. For example, the transport period can be two transports and two stops, which includes one regular transport sub-period and one self-adaptive transport sub-period. The transport period also can be three transports and three stops, which includes one regular transport sub-period and two self-adaptive transport sub-periods. The transport period also can be four transports and four stops, which includes two regular transport sub-periods and two self-adaptive transport sub-periods. The incubation unit transports the reaction containers according to the regular transport sub-period and the self-adaptive transport sub-period of the transport period to move the reaction containers to the specific executing stations. The regular operations of different tests are performed in the regular transport sub-period. A specific self-adaptive operation of the specific test is performed in the self-adaptive transport sub-period.

The present disclosure is further illustrated as below be way of embodiments and accompanying drawings.

### First embodiment

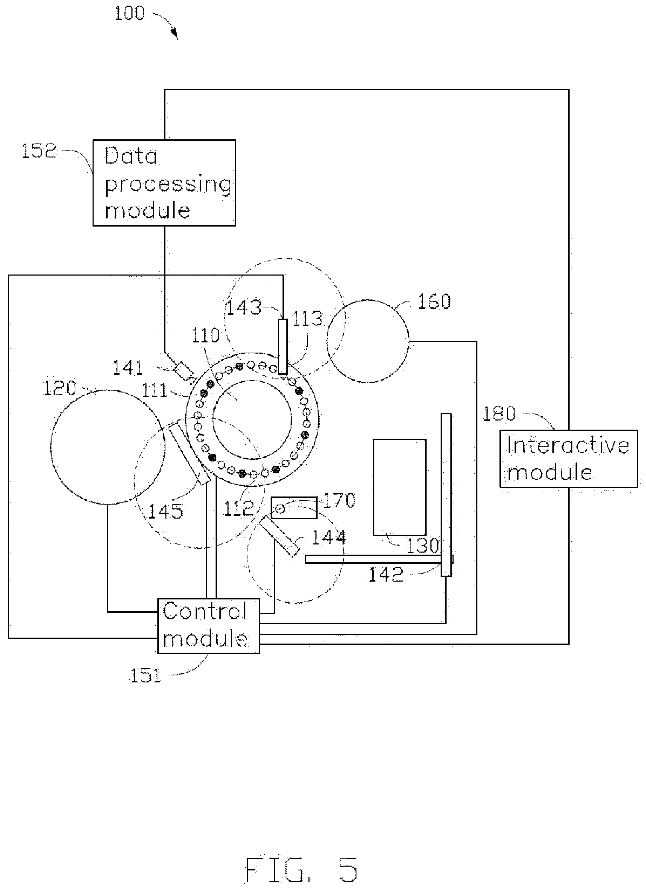

Referring to FIG. 5, an automatic analysis device 100 includes an incubation unit 110, a reagent holder 120, a reaction container supply 130, an operation mechanism and an analysis system. The incubation unit 110 provides a place to incubate the reactive solution held in the reaction container 13 and transport the reaction containers 13 to the operation mechanism 140. The incubation unit 110 can be a rotatable ring-shaped structure and includes at least one circular carousel. The incubation unit 110 includes at least one container holder 114 set on the circular carousel to hold the reaction container 13. There is at least one executing station is defined on the transport track of the incubation unit 110 to perform operations for the reaction container. In other embodiments, in view of temperature requirement to the incubation of the reactive solution, the incubation unit 110 still provides a constant temperature environment. The reagent holder 120 is used to hold a number of reagent containers, such as a reagent bottle, and supplies different reagents during the analysis of the target component in the sample. The reaction container supply 130 is used to receive a number of reaction containers 13, such as a cuvette, and supplies the reaction containers 13 to the incubation unit 110 during the analysis. In a specific embodiment, the reagent holder 120 and the reaction container supply 130 are located at a peripheral region of the incubation unit 110. In some embodiments, the automatic analysis device 100 further includes a cleaning separator 160 and a sample supply depot 170 set at a peripheral region of the incubation unit 110. The cleaning separator 160 is used to removes unreacted components in the reactive solution. In FIG. 5, the cleaning separator 160 is located outside of the incubation unit 110, that is the cleaning separator 160 and the incubation unit 110 are independent from each other. The sample supply depot 170 is used to provide a place to hold the reaction container 13 ready for the injection of the sample. In some embodiments, the sample supply depot 170 also can be set on the incubation unit 110.

The operation mechanism 140 includes a detection unit 141, a delivering unit, a sample injection unit 144, and a reagent injection unit 145. The delivering unit is used to deliver the reaction container between the incubation unit 110 and the other units located at the periphery of the incubation unit 110, such as the cleaning separator 160, the sample supply depot 170, and the reaction container supply 130. The detection unit 141 is used to detect the target component in the reaction container on the incubation unit. The detection unit 141 can be a photometer which detects luminous intensity of the target component and outputs an electric signal corresponding to the luminous intensity of the target component. A concentration of the target component in the sample can be calculated according to the luminous intensity. An injection unit includes the sample injection unit 144 and the reagent injection unit 145. The sample injection unit can be an aspirated needle used to draw and inject the sample. The reagent injection unit can be an aspirated needle used to draw and inject the reagent. The sample injection unit and the reagent injection unit can be combined as the injection unit.

In this embodiment, the delivering unit 146 includes a first delivering unit 142 and a second delivering unit 143. The first delivering unit 142 is used to deliver the reaction container 13 among the incubation unit 110, the sample supply depot 170, and the reaction container supply 130. A delivering track of the second delivering unit 143 respectively intersects with the incubation unit 110 and the cleaning separator 160. The second delivering unit 143 is used to deliver the reaction containers 13 between the incubation unit 110 and the cleaning separator 160.

Corresponding to the operation mechanism, the executing stations of the incubation unit 110 includes a detection station 111 where the detection unit 141 detects the target component in the reaction container, an injection station 112 where the reagent injection unit injects the reagent, a delivering station 112 and 113 where the delivering unit delivers the reaction containers, etc. The executing station mentioned above can corresponds to a lot of operation mechanism, such as the executing station 112 can be both the injection unit corresponding to the injection operation of the reagent injection unit and the delivering station corresponding to the delivering operation of the first delivering unit.

The analysis system includes a control module 151 and a data processing module 152. The control module 151 is respectively connected to the incubation unit 110, the reagent holder 120, the cleaning separator 160, the sample injection unit 144, the reagent injection unit 145, the first delivering unit 142, and the second delivering unit 143 to control the actions of each unit. In the other hand, the control module 151 is connected to an interactive module 153 to receive input information of the user. The data processing module 152 is connected to the detection unit 141 to receive the electric signal output from the detection unit 141. The data processing module 152 processes the electric signal and outputs a result of the process to the user via the interactive module 153. In some embodiments, the control module 151 is connected to the detection unit 141 to control the analysis operation of the detection unit 141.

In an embodiment of the present disclosure, the control module 151 of the analysis system controls the transport of the incubation unit 110 according to the predetermined transport period and controls the operations related to the incubation unit 110. The operations include the regular operations and the self-adaptive operations. Each transport period includes at least one regular transport sub-period and at least one self-adaptive transport sub-period corresponding to the self-adaptive operations of the test. The control module 151 controls the incubation unit 110 to transport the first transport distance in the regular transport sub-period of the transport period, and then control the incubation unit 110 to stop in the stop duration of the regular transport sub-period. The control module 151 controls the operation mechanisms to perform the regular operations in the stop duration of the regular transport sub-period. In this embodiment, the first transport distance of the regular transport sub-period is determined at least according to a reference position and a transport interval. In a first transport period after the automatic analysis device starts to analyze, the reference position is defined as an initial position where the automatic analysis device starts. In the nth transport period, the reference position is defined as a stop position where the incubation unit 110 stops after the transport of a same regular transport sub-period of the (n-1)th transport period, wherein n is an integer greater than or equal to two. The control module 151 controls the incubation unit 110 to transport the second transport distance in the self-adaptive transport sub-period of the transport period and stop at the executing station capable of performing the specific self-adaptive operation, then controls the operation mechanisms to perform the specific self-adaptive operation at this executing station. The second transport distance of the self-adaptive transport sub-period is determined by a present position of the reaction container needs the specific self-adaptive operation and the position of the executing station performing the specific self-adaptive operation.

In the specific embodiment, the regular operations and the self-adaptive operations are determined by an operation time sheet. The user inputs the target component to be analyzed and the analysis items corresponding to the target component via the interactive module before starting the analysis. The test mode, such as one step test mode or the two steps test mode, is determined by the analysis items. The analysis system generates an operation time sheet according to the target components and the analysis items input by the user. The operation time sheet can be generated before the start of the target component analysis or after the input of the analysis items, also can be generated during the target component analysis. If the operation times of the regular operations for the target component analysis match the regular transport sub-period of the transport period, the analysis system controls the operation mechanism to perform the regular operation in the regular transport sub-period. Thus, the test flux is improved by this way. For the self-adaptive transport sub-period, if the operation times of the self-adaptive operation for the target component analysis match the self-adaptive transport sub-period of the transport period, the analysis system controls the operation mechanism to perform the self-adaptive operation in the self-adaptive transport sub-period. Because each transport period includes at least one self-adaptive transport for the self-adaptive operations related to the target component, all the self-adaptive operations can be traversed when the incubation unit transports according to the transport period. The analysis system check whether or not there is the incubation of the sample is finish in the self-adaptive transport sub-period and needs the self-adaptive operation corresponding to the self-adaptive transport sub-period when determines whether the operation time of the self-adaptive operation match the self-adaptive transport sub-period. Thus, in this embodiment, the self-adaptive operations are considered as the sequential operations can be both taken care every self-adaptive operation and performed at the specific time period needs the self-adaptive operation to support the variable incubation time, satisfy the analysis capability requirement of the test, and improve the analysis capability.

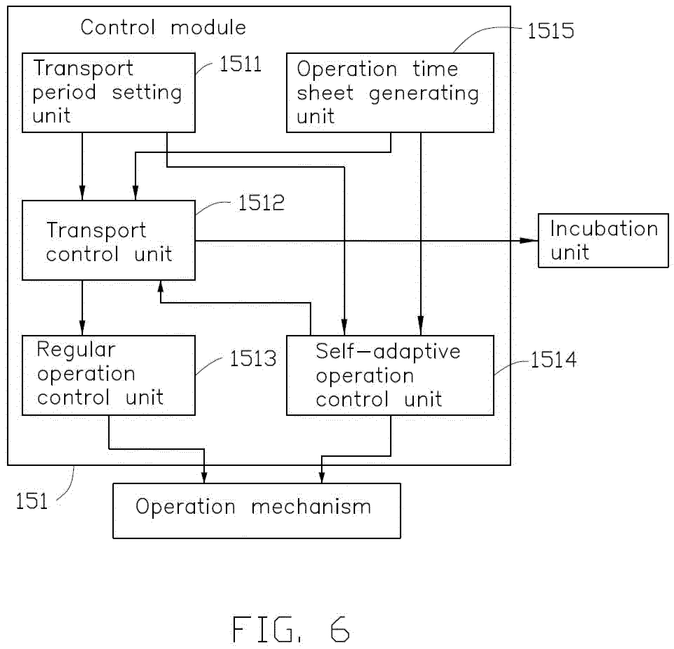

Referring to FIG. 6, in a specific embodiment, the control module 151 of the analysis system includes a transport period saving unit 1511, a transport control unit 1512, a regular operation control unit 1513, and a self-adaptive operation control unit 1514. The transport period saving unit 1511 is used to save the predetermined transport period. Each transport period includes at least one regular transport sub-period and at least one self-adaptive transport sub-period. The transport control unit 1512 is used to control the incubation unit 110 to transport according to the transport periods output from the transport period saving unit 1511. In the regular transport sub-period, the transport control unit 1512 controls the incubation unit 110 to transport the reaction containers the first transport distance and stop the reaction container after the transport. In the self-adaptive transport sub-period, the transport control unit 1512 controls the incubation unit 110 to transport the reaction containers the second transport distance during the self-adaptive transport duration and stop the reaction containers 13 at the executing stations capable of performing the corresponding self-adaptive operations. The regular operation control unit 1513 is used to control the operation mechanism 140 to perform the corresponding regular operations to the reaction containers 13 in the regular stop duration. The self-adaptive operation control unit 1514 is used to control the operation mechanism 140 to perform the corresponding self-adaptive operations to the reaction containers 13 during the self-adaptive stop duration.

In the other embodiment, the control module 151 further includes an operation time sheet generating unit 1515. The operation time sheet generating unit 1515 is used to generate an operation time sheet of a corresponding relation between a chronological sequence of the analysis items and the transport period of the incubation unit according to the target components and the analysis items input by the user. The regular operation control unit 1513 acquires the regular operations of which the operation times match each regular transport sub-periods of each transport period and controls the operation mechanism to perform the regular operations matching the regular transport sub-periods after the transport control unit controlling the incubation unit to transport and then stop according to the regular transport sub-period. The self-adaptive operation control unit 1514 acquires the self-adaptive operation of which the operation time match each self-adaptive transport sub-periods of each transport period and corresponding to the sample to be detected in the self-adaptive transport sub-period. The self-adaptive operation control unit 1514 calculates out the transport distance of the incubation unit according to the present position of the reaction container needs the self-adaptive operation and the position of the executing station performing the self-adaptive operation when the transport control unit controls the incubation unit to transport according to the self-adaptive transport sub-period. The transport control unit controls the incubation unit to transport according the transport distance. The self-adaptive operation controls the operation mechanism to perform the self-adaptive operation after the incubation unit stop. When the self-adaptive operation control unit determines there is no operation time of the self-adaptive operation match the self-adaptive transport sub-period, the transport control unit controls the incubation unit to remain stationary in the self-adaptive transport sub-period.

In the first transport distance of the regular transport sub-period can be calculated out when the regular transport is going to be executed and also can be calculated out after the operation time sheet is generated. There are one reference position and one target position defined after each regular transport. The target position is defined as a position transporting the predetermined transport interval from the reference position. For the first transport period, the reference position is defined as an initial position where the automatic analysis device starts. For the nth transport period, the reference position is defined as a stop position where the incubation unit 110 stops after the transport of a same regular transport sub-period of the (n-1)th transport period, wherein n is an integer greater than or equal to two.

Similarly, the second transport distance of the self-adaptive transport sub-period can be calculated out when the self-adaptive transport is going to be executed and also can be calculated out after the operation time sheet is generated. The self-adaptive transport sub-periods in which each self-adaptive operation is performed can be determined by the operation time sheet after the operation time sheet is generated. The second transport distance can be determined by the position of the reaction container needs to be performed the self-adaptive operation in the self-adaptive transport sub-period and the target position. The target position is defined as the position of executing station going to perform the self-adaptive operation.

In order to further understanding the technological merit of present application, the present disclosure is further illustrated as below be way of combing specific transport periods.

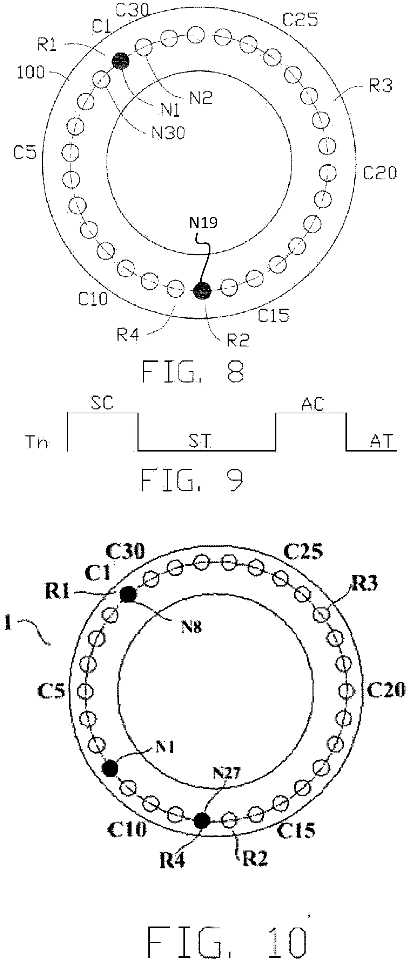

Referring to FIG. 8, in one specific embodiment, the incubation unit 310 is circular and includes at least one ring-shaped carousel. In this embodiment, the incubation unit 310 is a single carousel. The incubation unit 110 sets a number of grooves or apertures thereon which are called reaction container holders. A total number of the reaction container holders on the incubation unit 110 is labeled as N which equals to thirty in this embodiment. The reaction container holders are used to incubate and/or hold the reaction containers and transport the reaction containers to the specific executing station for being performed the corresponding operations. The executing stations R are a number of specific positions on the transport track of the incubation unit where the reaction containers on the incubation unit can be transported. The specific positions are the positions where the reaction containers are performed the operations by the operation mechanism, such as an intersection of the reaction container holder and a movement track of the operation mechanism or an intersection of the container holder and a center line of the operation mechanism. For example, the injection station is the intersection of the reaction container holder and a movement track of the injection unit. The detection station is the intersection of the reaction container holder and a center line of the operation mechanism. The operations of the operation mechanism can be classified as the regular operations and the self-adaptive operations. The regular operations are performed in the stop duration after the regular transport of the incubation unit. The regular operations are usually necessary to each test but are irrelevant to the incubation time, such as the move-in operation for moving the reaction containers on the incubation unit, the photometry operation, and so on. The self-adaptive operations are performed in the stop duration after the self-adaptive transport and relevant to the incubation time, such as the second reagent injection operation, a move-out operation, and so on. In this embodiment, the regular photometry operation is performed at the executing station R1. The regular move-in operation is performed at the executing station R2. The self-adaptive second reagent injecting operation and the self-adaptive move-out operation are performed at the executing station R3. The regular move-out operation is performed at the executing station R4.

For the convenient of the description, a rule is set as below: in order to label a relative position relationship of each executing station, the position coordinates C1, C2... C30 of the executing stations are defined along a counterclockwise direction from an original point C1 at the detection station R1. Such that, the position coordinates of the executing stations R4, R2, and R3 correspondingly are C11, C12, and C23. In order to label a relative position relationship of each reaction container holders and number the reaction container holders, the position coordinates of the reaction container holders are labeled as N1, N2, N3 ... and N30 along a clockwise direction beginning from an original point N1 which is the reaction container holder at the executing station R1 with the position coordinate C1.

For the one step test mode, the test only needs one time reagent injection as illustrated in FIG. 1 or 2. The operations of the test include the sample injection operation, the reagent injection operation, the container move-in operation moving a new reaction container on the incubation unit, the move-out operation moving the reaction container to the cleaning separator after the incubation, the move-in operation moving the reaction container back on the incubation unit after the separation of unreacted components, and the photometry operation. In these operations, the incubation time after the sample and reagent injections is a self-adaptive time set according to the target component. Thus, the move-out operation after the incubation is the self-adaptive operation, and the other operations are the regular operations.

It is assumed that the transport period includes at least one regular transport sub-period and one self-adaptive transport sub-period. The nth transport period is illustrated as FIG. 9, one transport period includes one regular transport sub-period and one self-adaptive transport period, which means the incubation unit transport twice and stops twice in one transport period. The regular transport sub-period illustrated in FIG. 9 includes SC duration and ST duration. The SC duration is the regular transport of the incubation unit. The ST duration is a stop duration after the regular transport. The self-adaptive transport sub-period includes AC duration and AT duration. The AC duration is the self-adaptive transport of the incubation unit. The AT duration is a stop duration after the self-adaptive transport. The AT duration corresponds to the self-adaptive move-out operation after the finish of the incubation for the reactive solution (hereafter the move-out operation after the incubation for short).

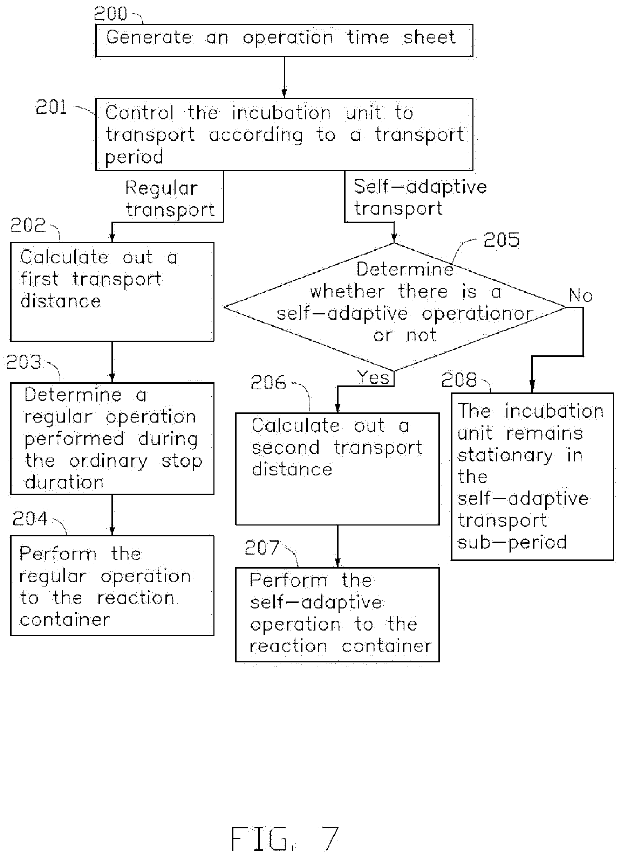

A flowchart in accordance with an embodiment of a component analysis method based on the automatic analysis device and analysis system mentioned above is illustrated in FIG. 7. The embodiment of the component analysis method includes the steps as below:

Step 200, the operation time sheet is generated according to the target component and the analysis items input by the user. For example, the operation time sheet can be a two dimensions data sheet. An operation time is determined by the operation and the sample to be detected. The operation times of the analysis items are cooperatively determined by a start time of the analysis, a test serial number of the sample to be detected, the analysis items performed to the sample to be detected, and the transport periods of the incubation unit.

Step 201, to start the analysis, the incubation unit is positioned at the initial position. And then, the incubation unit is controlled to transport according to the predetermined transport period. The transport period includes at least one regular transport sub-period for transporting in the first transport distance and at least one self-adaptive transport sub-period for transporting in the second transport distance.

The operations performed in the stop duration of each transport period are determined by a chronological sequence of the transport period when the incubation unit is controlled to transport according to the transport period. The steps as below are executed according to the present transport is whether the regular transport or the self-adaptive transport.

Step 202, the first transport distance is calculated out at first when the incubation unit 110 is ready to run in the forthcoming regular transport sub-period. The transport distance is usually measured by an interval between two adjacent reaction containers holders. The analysis system presets one corresponding first transport distance for each regular transport sub-period of the transport period. There is only one first transport distance if the transport period only includes one regular transport sub-period. A same first transport distance or different first transport distances can be set if the transport period includes more than two regular transport sub-periods. The incubation unit stops at the initial position when the analysis starts. In the first transport period, the first transport distance of all regular transport sub-periods is a distance difference defined between a present position of the reaction container and the target position along a transport direction of the incubation unit. The target position is defined as a position transporting the predetermined transport interval from the initial position. In the transport periods after the first transport period, a reference position is defined as a stop position of the same regular transport sub-period of the previous transport period. The target position is defined as a position transporting the predetermined transport interval from the reference position. The first transport distance is a distance difference defined between a present position of the reaction container and the target position along a transport direction of the incubation unit. For example, the first transport distance equal to a distance difference defined between a present position of the reaction container corresponding to the present transport period and the target position along a transport direction of the incubation unit.

Step 203, the specific regular operation performed during the forthcoming stop duration is determined before the incubation unit stops. The specific regular analysis operation is determined by checking the operation time sheet to find whether the operation times of each regular operation for each sample to be detected matches with the regular transport sub-period or not. If the operation time of the regular operations matches with the regular transport sub-period, step 204 is executed.

Step 204, the incubation unit 110 is controlled to transport the calculated first transport distance. The specific regular operation is performed to the reaction container in the stop duration of the regular transport sub-period.

Step 205, the analysis system determines whether or not the chronological sequence of the self-adaptive operation matches with the stop duration of the forthcoming self-adaptive transport sub-period when the incubation unit 110 is ready to run into the self-adaptive transport sub-period. If there is the self-adaptive operation matches with the self-adaptive transport sub-period, step 206 is executed. If there is no the self-adaptive operation matches with the self-adaptive transport sub-period, step 208 is executed.

Step 206, the analysis system calculates out the second transport distance of the present self-adaptive transport. The second transport distance is calculated as a distance difference between a present position of the reaction container to be performed by the specific self-adaptive operation and the position coordinate of the executing station where the specific self-adaptive operation is performed along the transport direction of the incubation unit.

Step 207, the incubation unit is controlled to transport the calculated second transport distance. The specific self-adaptive operation is performed to the sample to be detected in the stop duration of the present self-adaptive transport sub-period.

Step 208, if there is no self-adaptive operation matching with the forthcoming self-adaptive transport sub-period, the incubation unit 110 remains stationary in the forthcoming self-adaptive transport sub-period. In other embodiments, the incubation unit 110 can be transported a predetermined distance in this self-adaptive transport sub-period without performing the self-adaptive operation.

In the steps mentioned above, steps 202, 203, 205, and 206 can be executed during the transporting of the incubation unit or before the transporting of the incubation unit as long as the operation time sheet and the transport period of the incubation unit have been determined.

For example, in the Tn regular transport sub-period, to check the operation time sheet to find out the operation time of the regular operation for the reaction containers on the incubation unit whether matches with the Tn regular transport sub-period when the incubation unit is about to transport according to the regular transport sub-period. Such as, the photometry time of the reaction container held in the reaction container holder with a serial number N1 matches with the ST duration. The positions of the reaction containers on the incubation unit after the SC duration of the Tn regular transport sub-period are illustrated in FIG. 8. The reaction container holders with the serial number N1 and the reaction container holders with the serial number N19 are correspondingly transported to the executing stations R1 and R2. In the ST duration, the operation mechanism performs the corresponding regular operations respectively at the executing stations R1 and R2. At this moment, if the reaction container holder with the serial number N19 is empty, the first delivering unit performs the move-in operation to deliver a new reaction container in the reaction container holder with the serial number N19. At the same time, the reagent injection unit is controlled to inject the reagent in the reaction container held in the reaction container holder with the serial number N19 after the reaction container is moved in the reaction container holder with the serial number N19. The detection unit 141 also can be concurrently controlled to perform the photometry operation to the reaction container N1 located at the detection executing station R1. Thus, there are at least the first delivering unit 142 and the reagent injection unit 142 concurrently performs the regular operations after the regular transport of the incubation unit, there are even three or four regular operations can also be concurrently performed, such as the photometry operation of the reaction container on the reaction container holder N1 performed by the detection unit at executing station R1, the move-in operation of the new reaction container on the reaction container holder N19 performed by the delivering mechanism at executing station R2, and so on. Therefore, the analysis efficiency of the operation mechanism is increased by the concurrent operations in the regular transport sub-period and the test flux of the automatic analysis device is increased.

The incubation unit runs the AC duration of the self-adaptive transport sub-period after the operations in the ST duration have been finished. The operation corresponding to the stop duration of the self-adaptive is the move-out operation after the incubation. To check the operation time sheet to find out whether or not there are the move-out operation times of the reaction containers on the incubation unit match with the stop duration AT when the incubation unit is about to transport according to the self-adaptive transport sub-period. If there is at least one move-out operation matching with the stop duration AT, the interval number X of the reaction containers holder through which the incubation unit needs to transport (that is the second transport distance) is calculated according to the present position of the reaction containers and the position coordinate of the executing station performing the move-out operation. In this embodiment, with a counterclockwise direction as a positive direction, the X is an integer less than the total number N of the container holders on the incubation unit. The analysis system controls the incubation unit transports X multiples of the interval between two adjacent reaction containers holders when the incubation unit transports in the AC duration of the self-adaptive transport sub-period and stops the incubation unit at the executing station performing the move-out operation. The X equal to zero means that the incubation unit remains stationary in the self-adaptive transport duration AC or transports N multiples of the interval between two adjacent reaction containers holders. In the self-adaptive stop duration AT, the self-adaptive operation control unit 1514 controls the second delivering unit 143 to move the reaction container 13 to the cleaning separator 160.

In normal situation, the operations performed after the regular transport sub-period of each transport period include a move-in operation for moving a new reaction container on the incubation unit. That means a new analysis is activated in each transport period. In the first transport period, only the move-in operation is performed to move a new reaction container in the empty container holder located at the executing station R2. The first test begins on the incubation unit after the move-in operation of the new reaction container. There are a lot of tests in process on the incubation unit after several transport periods. In the Tn transport period, the reaction container moved on the incubation unit during the ST duration is not the reaction container moved out of the incubation unit during the AT duration, but some reaction container performed the move-in operation of the new reaction container.

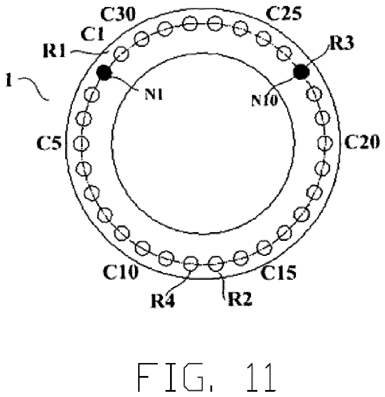

In the T(n+1) transport period, positions of the reaction containers on the incubation unit is illustrated in FIG. 10. With the counterclockwise direction as the positive direction, the distance or step increment (that is the first transport distance) through which the incubation unit regular transports along counterclockwise direction is calculated as (M-X) (wherein (M-X) is greater than zero, the distance or step increment is along the clockwise direction when (M-X) is less than zero, and (M-X) equal to zero means the incubation unit remains stationary). The X is the step increment of the self-adaptive transport in the previous transport period. That is, comparing with the previous Tn regular transport sub-period, the incubation unit transports forward or backwards a constant M (that is the predetermined transport interval), the constant M is less than N and cannot be exactly divided by N. In this embodiment, M equals to seven. The container holder 114 with the serial number N8 and the container holder 114 with the serial number N27 are correspondingly located at the executing stations R1 and R4. The reaction containers held in the container holders with the serial numbers N8 and N27 can be respectively performed the corresponding regular operations. If the incubation of the reaction container held in the container holder with the serial number N10 is finished and needs to perform the self-adaptive move-out operation, the second transport distance is calculated according to the present position of the reaction container holder with the serial number N10 and the position coordinate of the executing station R3 where the self-adaptive move-out operation is performed. Referring to FIG. 10, the incubation unit transports forward in counterclockwise direction X transport intervals of twenty four. Referring to FIG. 11, the incubation unit is controlled to transport the reaction container holder with the serial number N10 to the executing station R3 for performing the self-adaptive move-out operation after the incubation.

In each period of subsequent tests, the incubation unit positions the reaction containers to the executing stations according to the chronological sequence of the analysis items in the regular transport sub-period and the self-adaptive transport sub-period to perform the regular operations and the self-adaptive operations. Thus, the variable incubation time and a flexible combination of different testing process are realized. The regular transport can each reaction container can traverse all coordinates of executing stations after N transport periods, that is, each reaction container traverse all of the executing stations and is performed the corresponding regular operation when arrives at the executing stations. The incubation unit transports the reaction containers need the self-adaptive operation to the specific executing station according to the self-adaptive operations of the reaction container in the self-adaptive transport period. The incubation unit transports in the counterclockwise direction a variate X multiples transport intervals, wherein X is zero, one, two, ..., N, and relevant to the setting of the total number N of the reaction container holders, the testing process of analysis reaction, and the incubation time. The value of X is determined by the reaction container needs the self-adaptive operation and the position of executing station performing the self-adaptive operation. Thus, the self-adaptive transport can make any reaction container arrives at the executing station of the requiring operation in any transport period.

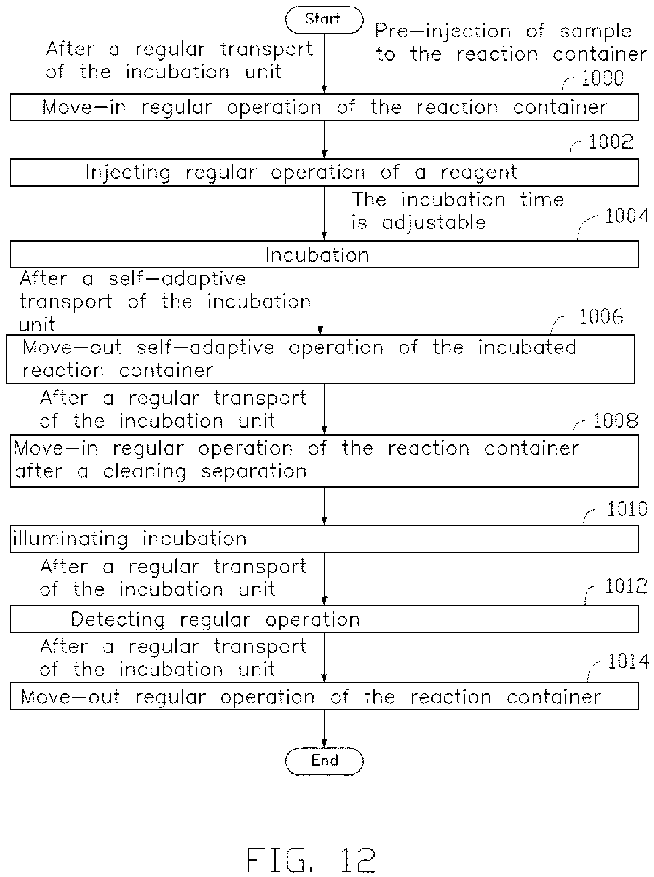

FIG. 12 illustrates a flowchart of a component analysis method for the target component in accordance with the one step test mode, and also referring to FIGS. 5 and 9. When the test begins, the first delivering unit 142 transports a new reaction container 13 from the reaction container supply 130 to the sample supply depot 170. The sample injection unit 144 injects the sample in the reaction container 13 held in the sample supply depot 170. At the same time, in the regular transport duration SC, the incubation unit 110 performs the regular transport to move one empty container holder 114 to the reagent injection station R2. In step S1000, in the regular stop duration ST, the first delivering unit 142 performs the regular move-in operation, as well as called an adding-cup operation, to move the reaction container filled with the sample on the incubation unit 110. At the same time, the reagent injection unit 145 is concurrently controlled to draw the reagent when the reaction container 13 is moved to the incubation unit 110. When the reaction container has been moved on the incubation unit 110, in the step 1002, the reagent injection unit 145 is controlled to inject the reagent in the reaction container at the executing station to realize the reagent injection. Thus, the first delivering unit 142 and the reagent injection unit 145 concurrently perform the corresponding regular operations after the regular transport of the incubation unit and the efficiency of the analysis is improved. In step 1004, the reaction container starts to incubate on the incubation unit after the injection of sample and reagent. The incubation time for the reaction container is flexible set according to the character of each test. The incubation unit 110 performs a self-adaptive transport in the self-adaptive transport duration AC of some transport period corresponding to the self-adaptive move-out operation after the incubation when the incubation of the reaction container is finished. The multiples of interval between two adjacent reaction containers holders through which the incubation needs to transport is calculated according to the present position of the reaction container and the position coordinate of the executing station for delivering 113. Thus, the reaction container is transported to the executing station for delivering 113. In step 1006, the incubation unit 110 is in the stop duration AT of the self-adaptive transport sub-period, the second delivering unit 143 performs the self-adaptive move-out operation moving the reaction container has finished the incubation to move the reaction container out of the incubation unit 110 and deliver to the cleaning separator 160. In the next few transport periods, the separation of the unreacted component is performed to the reaction container by the cleaning separator 160. During the cleaning separation of the reaction container, the analysis system continuous to control the incubation unit 110 to transport according to the transport period. After the cleaning separation, the incubation unit 110 exactly executes a regular transport SC of some transport period to transport an empty reaction container holder to the executing station for delivering 113. In step 1008, the incubation unit 110 is in the stop duration ST, the second delivering unit 143 performs a regular operation of moving the reaction container after the separation of the unreacted component to move the reaction container back on the incubation unit 110. In step 1010, the reaction container starts the incubation of the illumination. The incubation unit 110 continuous to transport according to the transport period. After the incubation of the illumination is finished, the incubation unit 110 executes the regular transport SC to transport the reaction container to the executing station of detection 111. In step 1012, the detection unit 141 performs the regular photometry operation to detect the illumination of the target component in the reaction container. The reaction container has finished the detection is transported to the executing station for delivering 112 by the incubation unit 110. In step 1014, the first delivering unit 142 performs a regular operation of throwing the reaction container to move the reaction container out of the incubation unit 110. So far, the testing process of the one step test mode is finished.

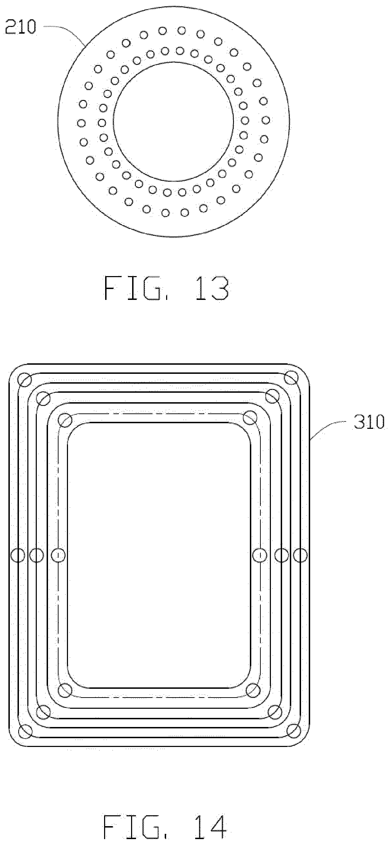

The incubation unit includes at least one round of reaction container holders defined on the circular carousel. In the other embodiments, the incubation unit includes two rounds of container holders defined on the circular carousel, referring to FIG. 13. The incubation unit 210 can set a lot of circular carousels to receive more reaction containers and to make the reaction containers one different round of circular carousels can be concurrently performed the regular operations and serially performed the self-adaptive operations. Thus, the test flux of the automatic analysis device is increased. In order to make the test more flexible, based on the present invention, the circular carousels are independently driven and flexible controlled to rotate. For example, there are three circular carousels. An outer circular carousel, a middle circular carousel, and an inner circular carousel are independently driven to make the test more flexible and convenient. The incubation unit can be a rotatable circular shape, such as rotatable discoid shape illustrated in FIG. 13, a rotatable rail, or the other configuration. Referring to FIG. 14, the other embodiment of the incubation unit, the incubation unit 310 employs the rails and the other configuration to improve the adaptability for different arrangement, expansibility and flexibility of automatic analysis. The functions and methods of these two embodiments are similar as above.

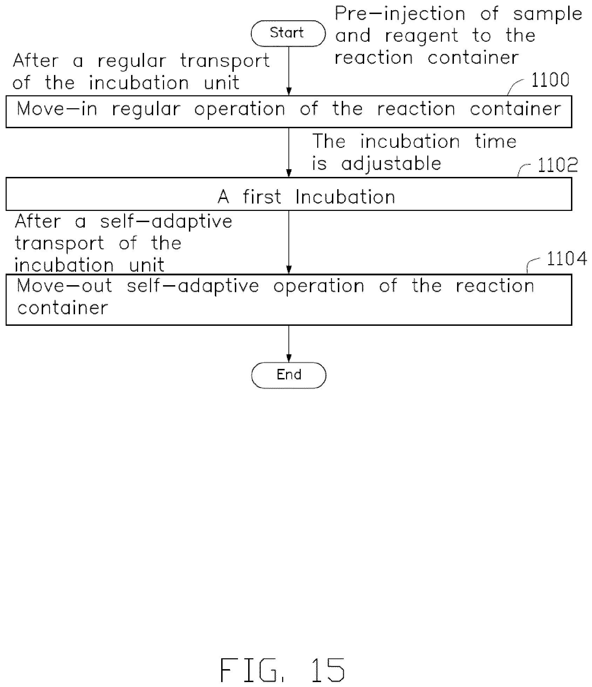

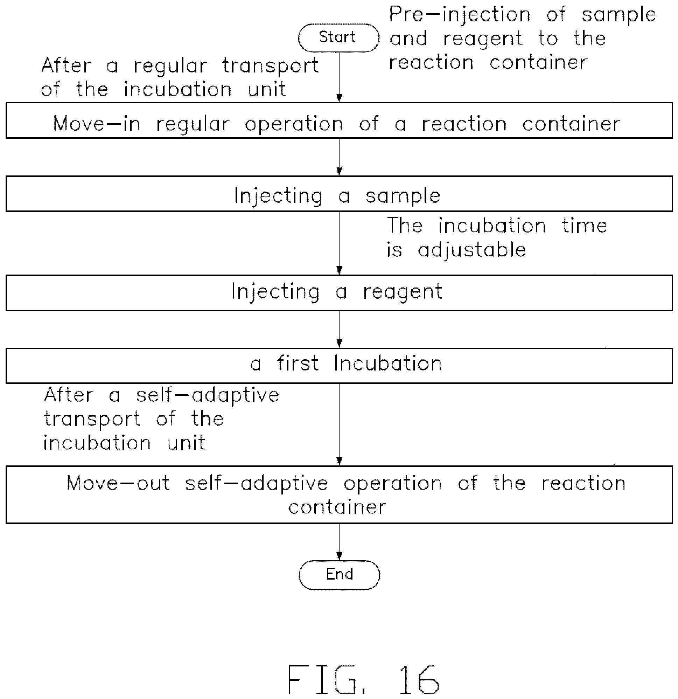

In the embodiments mentioned above, the sample and the reagent injection can be executed outside the incubation unit 110. In the other embodiments, the reagent injection can be executed outside the incubation unit. The sample and reagent injection are also can be executed on the incubation unit. In a specific embodiment, these ways can be flexible set according to the requirement. In the embodiments mentioned above, the detection is executed on the incubation unit. In the other embodiments, the detection also can be executed on the other units, such as the cleaning separator. FIG. 15 illustrates the other embodiment of a component analysis method based on the incubation unit, the sample and reagent injections are executed outside the incubation unit. After the regular transport of the incubation unit, in step S1100, the first delivering unit performs the regular move-in operation to move the reaction container 13 filled with the sample and the reagent on the incubation unit. In step 1102, the reaction container starts to incubate on the incubation unit. The incubation time can be adjusted. After the incubation, the incubation unit performs a self-adaptive transport. In step S1104, the second delivering unit performs the self-adaptive move-out operation to move the reaction container out of the incubation unit. The detection is executed on the other units and the reaction container will not be move back on the incubation unit again after the cleaning separation. Thus, the operation of the incubation unit in this embodiment is simplified to make the incubation unit's control easier. In other embodiments, FIG. 16 illustrates at block 1200, in the regular stop duration SC, the first delivering unit 142 performs the regular move-in operation to move the reaction container 13 in the container holder 114 on the incubation unit 110. FIG. 16 illustrates another embodiment of a component analysis method based on the incubation unit. The sample and reagent injection are executed on the incubation unit. The delivering unit moves the new reaction container on the incubation unit. The detection is executed on the other units. The operation of the incubation unit in this embodiment is simplified. Thus, in the specific embodiment, combinations of different embodiments can be flexible switched thereamong to satisfy the requirements of different designs.

The flowcharts of the component analysis method illustrated in FIGS. 14, 15, and 16 are different from each other, but are suitable for the same transport period setting. The difference therebetween refers to the different regular operations.

Each executing station can perform only one analysis operation or a number of different analysis items, even one executing station can perform both of the regular operation and the self-adaptive operation, for example, a move-in or out station is defined to perform both regular move-in operations and the self-adaptive move-out operations. The operation of one executing station can be performed by one kind of the operation mechanism or different kinds of the operation mechanisms, for example, in the injection unit, the sample injection and the reagent injection can be performed by the same aspirating needle or correspondingly be the sample injection needle and the reagent injection needle. Thus, the analysis design is more flexible. In practical use, the number of executing stations and the function of each station can be set according to a balance of the size of the automatic device, the cost of the manufacturing, and the test flux requirement of the component analysis.

In above embodiments, an agitating operation can be added as a regular operation or a self-adaptive operation after the sample and reagent injection. The agitating operation agitates the sample with the reagent in the reaction container. In the other specific embodiment, if the two steps and one separation test mode is employed, FIG. 3 illustrates the analysis items in accordance with the two steps and one separation test mode includes the sample injecting operation, a first reagent injecting operation, the adding-cup operation moving the reaction container of a new analysis sample on the incubation unit, a second reagent injecting operation after the first incubation, the move-out operation moving the reaction container to the cleaning separator after the second incubation, the first move-in operation moving the reaction container back on the incubation unit after the cleaning separation, and the photometry operation. Because the times for the first incubation after the sample and the first reagent injection and the second incubation after the second reagent injection is determined by the target component to be analyzed, the second reagent injecting operation after the first incubation and the move-out operation after the second incubation are defined as the self-adaptive operations, and the other operation are defined as the regular operations.

In another specific embodiment, if the two steps and two separations test mode is employed, FIG. 4 illustrates the analysis items in accordance with the two steps and two separations test mode includes the sample injecting operation, the first reagent injecting operation, the adding-cup operation moving the reaction container of a new analysis sample on the incubation unit, the first move-out operation moving the reaction container after the first incubation from the incubation unit to the cleaning separator, the first move-in operation moving the reaction container back on the incubation unit after the cleaning separator, the second reagent injecting operation, the second move-out operation moving the reaction container from the incubation unit to the cleaning separator after the second incubation, the second move-in operation moving the reaction container back on the cleaning separator, and the photometry operation. In these operations, because the times for the first incubation of the sample and after the first reagent injection and the second incubation, the second reagent injection is determined by the target component to be analyzed, the first move-out operation, the first incubation and the second move-out operation after the second incubation are the self-adaptive operations, and the other operations are defined as the regular operations.

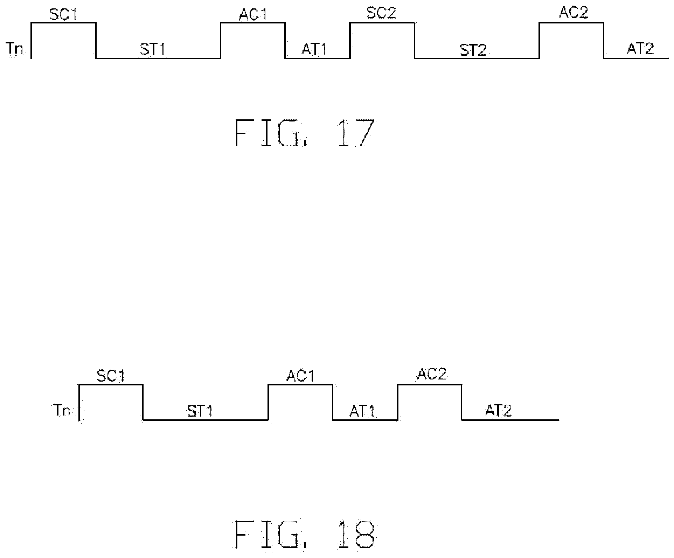

The testing process of the two steps test mode includes two self-adaptive operations according to the characters of the two steps test mode. Thus, as an exemplary embodiment, the number of the self-adaptive transport sub-periods in the transport period is greater than or equal to two, includes at least one regular transport sub-period and at least two self-adaptive transport sub-periods. Referring to FIGS. 17 and 18, FIG. 18 illustrates the Tn transport period. One transport period includes one regular transport sub-period and two self-adaptive sub-periods. The incubation unit transport three times and stops twice in one transport period. The regular transport sub-period includes a regular transport duration and a regular stop duration ST. The first self-adaptive transport sub-period includes a first self-adaptive transport duration AC1 and a first self-adaptive stop duration AT1. The second self-adaptive transport sub-period includes a second self-adaptive transport duration AC2 and a second self-adaptive stop duration AT2. The AT1 and AT2 durations respectively are stop durations after the self-adaptive transport and correspond to two self-adaptive operations.

A difference between a component analysis method in accordance with the two steps and one separation test mode and the component analysis method in accordance with the one step and one separation test mode is the component analysis method in accordance with the two steps and one separation test mode further includes a second reagent injection. Thus, there are two self-adaptive times and two self-adaptive operations. That is, the reaction container after the sample and the first reagent injection starts to incubate first time on the incubation unit. The incubation time is flexible set according to character of each operation. The incubation unit self-adaptive transports to move the reaction container to the executing station of injection when the first incubation is finish. The reagent injection unit is controlled to execute the second reagent injecting operation to finish the second reagent injection. The reaction container starts to incubate second time after the second reagent injection. The second incubation time can be flexible set according to the character of each operation. The incubation unit executes the self-adaptive transport to move the reaction container to the executing station of delivering for the self-adaptive move-out operation when the second incubation is finish. The rest analysis flow of the component analysis method for the two steps and one separation test mode is similar with that of the component analysis method in accordance with the one step and one separation test mode.

A difference between a component analysis method for the two steps and two separations test mode and the component analysis method in accordance with the one step and one separation test mode illustrated in FIG. 12 is the component analysis method in accordance with the two steps and two separations test mode includes two reagent injections and two cleaning separations. Thus, there are two self-adaptive incubation times and two move-out self-adaptive operations after the incubation. In detail, the first incubation is performed to the reaction container on the incubation unit after the sample injection and the first reagent injection. The first incubation time is flexible set according to the character of each operation. The incubation unit executes the self-adaptive transport to move the reaction container to the executing station of delivering after the first incubation. The second delivering unit executes the move-out self-adaptive operation to move the reaction container form the incubation unit to the cleaning separator. The incubation unit executes the regular transport to move the empty reaction container holder to the executing station of delivering after the separation. The second delivering unit executes the move-in regular operation to move the reaction container after the separation back on the incubation unit. The incubation unit executes the self-adaptive transport to move the reaction container to the injection station. The reagent injection unit executes the self-adaptive second reagent injecting operation to finish the second reagent injection. The second incubation is performed to the reaction container on the incubation unit after the second reagent injection. The second incubation time is flexible set according to the character of each operation. The incubation unit executes the self-adaptive transport to move the reaction container to the executing station of delivering for the self-adaptive move-out operation after the second incubation. The rest analysis flow of the component analysis method for the two steps and two separations test mode is similar with that of the component analysis method for the one step and one separation test mode.

The component analysis method also can include other analysis items except the analysis items mentioned above for satisfying a pre-treatment, a sample pre-dilution, three-steps test mode, and a combination thereof.

As above, by use of adding the regular transport sub-periods and the self-adaptive transport sub-periods in the transport period, the automatic analysis device can concurrently run more analysis items in the regular transport sub-period and serially run more self-adaptive analysis items in the self-adaptive transport sub-period. Thus, the component analysis becomes more flexible and the efficiency of the analysis is improved.

### Second embodiment

A difference between the first embodiment and the second embodiment is the determination of the first transport distance. In this embodiment, the first transport distance is a predetermined constant distance difference M. That is, the incubation unit transports a predetermined constant distance M along the predetermined direction in each of the regular transport durations. The first transport distance M is preferably an integral multiple of the separation distance between two adjacent container holders on the incubation unit. The first transport distance M is less than the total number N of the container holders on the incubation unit 110 and cannot be exactly divided by the total number N of the container holders. Meanwhile, the incubation unit is controlled to return to the regular resting position of the last regular transport sub-period after the present self-adaptive operation is finished. Thus, the container holders also can be transported to pass by all executing stations in N transport periods.

In the embodiment above, the regular transport of the incubation unit can make sure all the reaction container holders can be traversed after N transport periods to execute the regular operations of the analysis, such as the regular move-in operation for moving the new reaction container, the regular photometry operation, and so on. The self-adaptive transport is performed only when the conditions is satisfied and can arrive at any position by one transport for the operation with variable transport distance (that is the self-adaptive operation). Thus, the incubation time and the test flow can be flexibly set. The regular transport can make sure the test orderly run and is mean line and the core of the continuous test. The self-adaptive transport can make the test more flexible on the base of the regular transport. A combination of the regular transport and the self-adaptive transport can complete each other, balance the test flux and the analysis capability, and achieve the automatic continuous flexible multi-modes test.

## Claims

1. An automatic analysis method of an automatic analysis device (100), **characterized by**, the automatic analysis device (100) comprising an incubation unit (110) comprising a circular carousel which comprises a plurality of container holders for holding reaction containers; the incubation unit (110) further comprises at least one executing station (R1, R2, R3, R4) on a transport track of the circular carousel for performing operations on the reaction containers, the method being used to control rotation of the carousel and operations related to the incubation unit (110), the operations comprising a plurality of regular operations, the timing of which is not dependent on a predetermined incubation time of a reaction container, and a plurality of self-adaptive operations, the timing of which is dependent on a predetermined incubation time of a reaction container, wherein the analysis method comprises:
controlling the rotation of the carousel for a plurality of predetermined transport periods, wherein each transport period comprises at least one regular transport sub-period in which the carousel is rotated a first amount, and at least one self-adaptive transport sub-period in which the carousel is rotated a second amount, the first rotation amount of each regular transport sub-period is determined at least by a reference orientation and a predetermined rotation interval, the reference orientation is defined as an initial orientation of the carousel for the first transport period, and for subsequent transport periods, the reference orientation is defined as a stop orientation where the carousel stops after the rotation for a regular transport sub-period corresponding to a regular transport sub-period of the previous transport period, wherein the second amount of rotation of each self-adaptive transport sub-period is determined by a present position of a reaction container needing self-adaptive operations and the position of an executing station (R3) performing the self-adaptive operations;
executing the regular operation of the regular transport sub-period during a stop duration of the regular transport sub-period wherein the carousel is stopped after the first amount of rotation; and
controlling the incubation unit (110) to transport a reaction container needing self-adaptive operations to and stop at the executing station (R3), the executing station (R3) being configured for executing the self-adaptive operations of the self-adaptive transport sub-period and controlling an operation mechanism (140) of the executing station (R3) to execute the self-adaptive operations.

2. The method of claim 1, further comprising generating an operation time sheet of samples to be detected and the operations according to a number of the samples to be detected and analysis items input by a user; or, wherein the transport period comprise two regular transport sub-periods, the carousel is rotated the same first amount in these two regular transport sub-periods or the carousel is rotated different first amounts in these two regular transport sub-periods.

3. The method of claim 2, wherein before controlling the rotation of the carousel according to some regular transport sub-period of the present transport period, the method further comprises:
calculating the first rotation amount of the regular transport sub-period, the first rotation amount of the regular transport sub-period is a distance difference defined between the present position of the reaction container and the target position along a rotation direction of the carousel, the target position is defined as a position after the rotation for the predetermined rotation interval from the reference orientation; and
finding out the regular operation matching with the regular transport sub-period; and
controlling the rotation of the carousel according to the regular transport sub-period of the present transport period, comprising: controlling the carousel to stop after being rotated the first amount and controlling the operation mechanism (140) to perform the found regular operation after the carousel stops.

4. The method of one of claims 1-3, wherein the predetermined rotation interval is an integer less than a total number of the reaction container holders set on the carousel, and the integer cannot be exactly divided by the total number of the reaction containers.

5. The method of claim 2 or 3, wherein the self-adaptive operations are respectively corresponding to the self-adaptive operations for the samples to be detected, and before controlling the rotation of the carousel according to the self-adaptive transport sub-period of the present transport period, the method further comprises:
determining whether or not there is self-adaptive operation corresponding to the self-adaptive transport sub-period and the operation time of the self-adaptive operation matching with the self-adaptive transport sub-period, calculating the second rotation amount if there is the self-adaptive operation, the second rotation amount is calculated as a distance difference between a present position of the reaction container to be performed by the self-adaptive operation and the position coordinate of the executing station (R3) where the self-adaptive operation is performed along the rotation direction of the carousel;
controlling the rotation of the carousel according to the self-adaptive transport sub-period of the present transport period, comprising: controlling the carousel to stop after being rotated the second amount and performing the self-adaptive operation when the carousel stops; and
controlling the carousel to remain stationary in the self-adaptive transport sub-period if there is no self-adaptive operation matching with the forthcoming self-adaptive transport sub-period.

6. The automatic analysis method of any of claims 1 to 5, wherein the first rotation amount of each regular transport sub-period is a constant step increment; and controlling the carousel to rotate and then stop at a stop position of incubation in a previous regular transport sub-period of the present transport period.

7. The method of claim 6, wherein the first rotation amount is an integer less than a total number of the reaction container holders set on the carousel and the integer cannot be exactly divided by the total number of the reaction containers.

8. An analysis system of an automatic analysis device (100), **characterized by**, the automatic analysis device (100) comprising an incubation unit (110) comprising a circular carousel which comprises a plurality of container holders for holding reaction containers; the incubation unit (110) further comprising at least one executing station (R1, R2, R3, R4) on a transport track of the circular carousel for performing operations on the reaction containers, the analysis system being used to control rotation of the carousel and operations related to the incubation unit (110), the operations comprising a plurality of regular operations, the timing of which is not dependent on a predetermined incubation time of a reaction container, and a plurality of self-adaptive operations, the timing of which is dependent on a predetermined incubation time of a reaction container, wherein the analysis system comprises:
a transport control unit (1512) that controls the rotation of the carousel for a plurality of predetermined transport periods, wherein each transport period comprises at least one regular transport sub-period in which the carousel is rotated a first amount, and at least one self-adaptive transport sub-period in which the carousel is rotated a second amount, the transport control unit controls the carousel to rotate the first amount and then stop, the first rotation amount of each regular transport sub-period is determined at least by a reference orientation and a predetermined rotation interval, the reference orientation is defined as an initial orientation of the carousel for the first transport period, and for subsequent transport periods, the reference orientation is defined as a stop orientation where the carousel stops after the rotation for a regular transport sub-period corresponding to a regular transport sub-period of the previous transport period, the transport control unit controls the carousel to rotate the second amount and then stop, wherein the second amount of rotation of each self-adaptive transport sub-period is determined by a present position of a reaction container needing self-adaptive operations and the position of an executing station (R3) performing the self-adaptive operations;
a regular operation control unit (1513) that controls an operation mechanism (140) of the executing station (R1, R2, R4) to perform the regular operations on the reaction container during a stop duration of the regular transport sub-period of the transport period; and
a self-adaptive operation control unit (1514) that controls an operation mechanism (140) of the execution station to perform the self-adaptive operations to the reaction container during a stop duration of the self-adaptive transport sub-period.

9. The system of claim 8, wherein the predetermined rotation interval is an integer less than a total number of the reaction container holders set on the carousel and the integer cannot be exactly divided by the total number of the reaction containers, the system further comprises:
an operation time sheet generating unit (1515) that generates an operation time sheet about the operations of each sample to detected according to the number of samples to be detected and analysis operations input by the user;
the regular operation control unit (1513) that determines the operation time of the regular operation performed in the regular stop duration according to the operation time sheet, controls rotation of the carousel according to the regular transport sub-period, and controls the operation mechanism (140) to perform the regular operation in the regular transport sub-period; and
the self-adaptive control unit (1514) that determines the self-adaptive operation of which the operation time matches with the self-adaptive transport sub-period according to the operation time sheet and controls the operation mechanism (140) to perform the self-adaptive operations corresponding to each self-adaptive transport sub-period after the transport control unit (1512) controls the rotation of the carousel according to the self-adaptive transport sub-period.

10. The system of claim 9, wherein the transport control unit (1512) controls the carousel to remain stationary in the self-adaptive transport sub-period if the self-adaptive control unit (1514) determines there is no self-adaptive operation matching with the forthcoming self-adaptive transport sub-period according to the operation time sheet.

11. The system of claim 9 or 10, wherein the transport control unit (1512) calculates the first rotation amount before controlling the rotation of the carousel according to the regular transport sub-period, the first rotation amount of the regular transport sub-period is a distance difference defined between a present position of the reaction container and the target position along a rotation direction of the carousel, the target position is defined as a position after the rotation for the predetermined rotation interval from the preference orientation, the transport control unit (1512) calculates the second rotation amount according to the self-adaptive transport sub-period before controlling the rotation of the carousel and after the self-adaptive operation control unit determines the self-adaptive operation corresponding to the self-adaptive transport sub-period, the second rotation amount of the self-adaptive transport sub-period is calculated as a distance difference between a present position of the reaction container to be performed by the self-adaptive operation and the position coordinate of the executing station (R3) where the self-adaptive operation is performed along the rotation direction of the carousel.

12. The analysis system of claims 8 to 11, wherein the first rotation amount of each regular transport sub-period is a constant step increment

13. An automatic analysis device (100) comprising:
an operation mechanism (140) set around the incubation unit (110), wherein the executing station (R1, R2, R3, R4) corresponding to the operation mechanism (140) is defined at an intersection of the reaction container holder and a movement track of the operation mechanism (140) or an intersection of the container holder and a center line of the operation mechanism (140); and
the analysis system of any of claims 8 to 12.

## Patentansprüche

1. Eine automatische Analysemethode für ein automatisches Analysegerät (100), **dadurch gekennzeichnet, dass** das automatische Analysegerät (100) eine Inkubationseinheit (110) mit einem kreisförmigen Karussell umfasst, das seinerseits eine Mehrzahl von Halterungen für Reaktionsbehälter umfasst, wobei die Inkubationseinheit (110) weiterhin mindestens eine Ausführstation (R1, R2, R3, R4) auf einer Transportstrecke des kreisförmigen Karussells zur Ausführung von Operationen an den Reaktionsbehältern umfasst, die Methode zur Überwachung der Rotation des Karussells und der Operationen in Verbindung mit der Inkubationseinheit (110) verwendet wird und die Operationen eine Mehrzahl regulärer Operationen umfassen, deren Zeitablauf nicht von einer vorbestimmten Inkubationszeit eines Reaktionsbehälters abhängt, sowie eine Mehrzahl von selbstadaptierenden Operationen, deren Zeitablauf von einer vorbestimmten Inkubationszeit eines Reaktionsbehälters abhängt, wobei die Analysemethode Folgendes beinhaltet:
die Überwachung der Rotation des Karussells für eine Mehrzahl festgelegter Transportzeiträume, wobei jeder Transportzeitraum mindestens einen regulären Transportunterzeitraum umfasst, in dem das Karussell um einen ersten Anteil gedreht wird, sowie einen selbstadaptierenden Transportunterzeitraum, in dem das Karussell um einen zweiten Anteil gedreht wird, der erste Rotationsanteil des regulären Transportunterzeitraums mindestens durch eine Referenzausrichtung und ein vorbestimmtes Rotationsintervall bestimmt wird, die Referenzausrichtung als eine anfängliche Ausrichtung des Karussells für den ersten Transportzeitraum definiert wird
und die Referenzausrichtung für die folgenden Transportzeiträume als eine Anhaltausrichtung definiert wird, in der das Karussell nach der Drehung des regulären Transportunterzeitraums stoppt und die einem regulären Transportunterzeitraum des vorherigen Transportzeitraums entspricht, wobei der zweite Anteil der Drehung jedes selbstadaptierenden Transportunterzeitraums anhand einer aktuellen Position eines Reaktionsbehälters mit erforderlichen selbstadaptierenden Operationen und der Position einer Ausführstation (R3) zur Ausführung selbstadaptierender Operationen bestimmt wird,
das Ausführen der regulären Operation des regulären Transportunterzeitraums während einer Stoppdauer des regulären Transportunterzeitraums, wenn das Karussell nach einem ersten Anteil der Drehung stoppt, und
die Überwachung der Inkubationseinheit (110) beim Transport eines Reaktionsbehälters, der selbstadaptierende Operationen benötigt, zur Ausführstation (R3) und dem dortigen Anhalten, wobei die Ausführstation (R3) zur Ausführung der selbstadaptierenden Operationen des selbstadaptierenden Transportunterzeitraums und zur Überwachung eines Operationsmechanismus (140) der Ausführstation (R3) zur Ausführung der selbstadaptierenden Operationen ausgelegt ist.

2. Das Verfahren gemäß Anspruch 1, das weiterhin die Erstellung eines Zeiterfassungsbogens für festzustellende Proben sowie Operationen bezüglich einer Anzahl festzustellender Proben und von einem Anwender eingegebenen Analyseobjekten umfasst oder wobei der Transportzeitraum zwei reguläre Transportunterzeiträume umfasst, das Karussell in diesen beiden regulären Transportunterzeiträumen um den gleichen ersten Anteil gedreht wird oder das Karussell in diesen beiden regulären Transportunterzeiträumen um unterschiedliche erste Anteile gedreht wird.

3. Die Methode gemäß Anspruch 2, wobei vor der Überwachung der Rotation des Karussells in Bezug auf einige reguläre Transportunterzeiträume des aktuellen ersten Transportzeitraums die Methode weiterhin Folgendes umfasst:
die Berechnung des ersten Rotationsanteils des regulären Transportunterzeitraums, wobei der erste Rotationsanteil des regulären Transportunterzeitraums dem Distanzunterschied zwischen der aktuellen Position des Reaktionsbehälters und der Zielposition entlang einer Drehrichtung des Karussells entspricht und die Zielposition als eine Position nach der Drehung während eines vorbestimmten Rotationsintervalls aus der Referenzausrichtung heraus definiert wird, und
die Ermittlung der regulären Operation, die zum regulären Transportunterzeitraum passt, und
die Überwachung der Rotation des Karussells in Bezug auf den regulären Transportunterzeitraum des aktuellen Transportzeitraums, die die Überwachung des Stopps des Karussells nach der Drehung um den ersten Anteil und die Überwachung des Operationsmechanismus (140) zur Ausführung der ermittelten regulären Operation nach dem Stopp des Karussells umfasst.

4. Die Methode nach einem der Ansprüche 1-3, wobei das vorbestimmte Rotationsintervall eine Ganzzahl ist, die unter der Gesamtanzahl der auf dem Karussell befindlichen Halterungen für Reaktionsbehälter liegt, und die Ganzzahl nicht ohne Rest durch die Gesamtanzahl der Reaktionsbehälter dividiert werden kann.

5. Die Methode gemäß Anspruch 2 oder 3, wobei die selbstadaptierenden Operationen jeweils den selbstadaptierenden Operationen für die festzustellenden Proben entsprechen und vor der Überwachung der Rotation des Karussells in Bezug auf den selbstadaptierenden Transportunterzeitraum des aktuellen Transportzeitraums die Methode weiterhin Folgendes umfasst:
die Feststellung, ob eine dem selbstadaptierenden Transportunterzeitraum entsprechende selbstadaptierende Operation vorhanden ist oder nicht, sowie der Operationszeit der dem selbstadaptierenden Transportunterzeitraum entsprechenden selbstadaptierenden Operation, die Berechnung des zweiten Anteils der Drehung, wenn eine selbstadaptierende Operation stattfindet, als Distanzunterschied zwischen einer aktuellen Position des von der selbstadaptierenden Operation zu bearbeitenden Reaktionsbehälters und den Positionskoordinaten der Ausführstation (R3), wenn die selbstadaptierende Operation entlang der Rotationsachse des Karussells erfolgt;
die Überwachung der Rotation des Karussells in Bezug auf den selbstadaptierenden Transportunterzeitraum des aktuellen Transportzeitraums, die die Überwachung des Stopps des Karussells nach der Drehung um den zweiten Anteil und die Ausführung der selbstadaptierenden Operation nach dem Stopp des Karussells umfasst; und
die Überwachung, dass das Karussell während des selbstadaptierenden Transportunterzeitraums stationär bleibt, wenn keine selbstadaptierende Operation mit dem folgenden selbstadaptierenden Transportunterzeitraum übereinstimmt.

6. Die automatische Analysemethode gemäß einem der Ansprüche 1-5, wobei der erste Anteil der Drehung jedes regulären Transportunterzeitraums aus einem konstanten Inkrement besteht, die Rotation des Karussells überwacht wird und der Stopp auf einer Stopp-Position der Inkubation in einem vorhergehenden regulären Transportunterzeitraum des aktuellen Transportzeitraums erfolgt.

7. Die Methode gemäß Anspruch 6, wobei der erste Anteil der Rotation eine Ganzzahl ist, die unter der Gesamtanzahl der auf dem Karussell befindlichen Halterungen für Reaktionsbehälter liegt, und die Ganzzahl nicht ohne Rest durch die Gesamtanzahl der Reaktionsbehälter dividiert werden kann.

8. Ein Analysesysteme für ein automatisches Analysegerät (100), **dadurch gekennzeichnet, dass** das automatische Analysegerät (100) eine Inkubationseinheit (110) mit einem kreisförmigen Karussell umfasst, das seinerseits eine Mehrzahl von Halterungen für Reaktionsbehälter umfasst, wobei die Inkubationseinheit (110) weiterhin mindestens eine Ausführstation (R1, R2, R3, R4) auf einer Transportstrecke des kreisförmigen Karussells zur Ausführung von Operationen an den Reaktionsbehältern umfasst, das Analysesystem zur Überwachung der Rotation des Karussells und der Operationen in Verbindung mit der Inkubationseinheit (110) verwendet wird und die Operationen eine Mehrzahl regulärer Operationen umfassen, deren Zeitablauf nicht von einer vorgewählten Inkubationszeit eines Reaktionsbehälters abhängt, sowie eine Mehrzahl von selbstadaptierenden Operationen, deren Zeitablauf von einer vorgewählten Inkubationszeit eines Reaktionsbehälters abhängt, wobei das Analysesystem Folgendes beinhaltet:
eine Transportkontrolleinheit (1512), die die Rotation des Karussells für eine Mehrzahl vorbestimmter Transportzeiträume überwacht, wobei jeder Transportzeitraum mindestens einen regulären Transportunterzeitraum umfasst, in dem das Karussell um einen ersten Anteil gedreht wird, und mindestens einem selbstadaptierenden Transportunterzeitraum, in dem das Karussell um einen zweiten Anteil gedreht wird, wobei die Transportkontrolleinheit kontrolliert, dass sich das Karussell um den ersten Anteil dreht, dann stoppt, der erste Anteil der Drehung jedes regulären Transportunterzeitraums durch mindestens eine Referenzausrichtung und ein vorbestimmtes Rotationsintervall bestimmt wird, die Referenzausrichtung als eine anfängliche Ausrichtung des Karussells für den ersten Transportzeitraum definiert wird und die Referenzausrichtung für die folgenden Transportzeiträume als eine Anhaltausrichtung definiert wird, in der das Karussell nach der Drehung des regulären Transportunterzeitraums des vorausgegangenen Transportzeitraums stoppt, die Transportkontrolleinheit die Drehung des Karussells um den zweiten Anteil und seinen Stopp kontrolliert und wobei der zweite Anteil der Drehung jedes selbstadaptierenden Transportunterzeitraums anhand einer aktuellen Position eines Reaktionsbehälters mit erforderlichen selbstadaptierenden Operationen und der Position einer Ausführstation (R3) zur Ausführung selbstadaptierender Operationen bestimmt wird;
einer Kontrolleinheit (1513) für reguläre Operationen, die einen Operationsmechanismus (140) der Ausführstation (R1, R2, R4) zur Ausführung der regulären Operationen am Reaktionsbehälter während einer Stoppdauer des regulären Transportunterzeitraums des Transportzeitraums überwacht; und
einer Kontrolleinheit (1514) für selbstadaptierende Operationen, die einen Operationsmechanismus (140) der Ausführstation zur Ausführung der selbstadaptierenden Operationen am Reaktionsbehälter während einer Stoppdauer des selbstadaptierenden Transportunterzeitraums des Transportzeitraums überwacht.

9. Das System gemäß Anspruch 8, wobei das vorbestimmte Rotationsintervall eine Ganzzahl ist, die unter der Gesamtanzahl der auf dem Karussell befindlichen Halterungen für Reaktionsbehälter liegt, und die Ganzzahl nicht ohne Rest durch die Gesamtanzahl der Reaktionsbehälter dividiert werden kann, wobei das System weiterhin Folgendes umfasst:
eine Einheit (1515) zur Erstellung eines Zeiterfassungsbogens, das einen Zeiterfassungsbogen für die Operationen jeder festzustellenden Probe bezüglich einer Anzahl festzustellender Proben und von einem Anwender eingegebenen Analyseobjekten erstellt;
die Einheit (1513) zur Kontrolle der regulären Operationen, die die Operationszeit der regulären Operation bestimmt, die während der regulären Stoppdauer gemäß des Zeiterfassungsbogens für Operationen ausgeführt werden, die Drehung des Karussells abhängig vom regulären Transportunterzeitraum und den Operationsmechanismus (140) zur Ausführung der regulären Operationen im regulären Transportunterzeitraum überwacht; und
die Einheit (1514) zur Kontrolle der selbstadaptierenden Operationen, die die selbstadaptierende Operation bestimmt, deren Operationszeit zum selbstadaptierenden Transportunterzeitraum gemäß des Zeiterfassungsbogens für Operationen passt, den Operationsmechanismus (140) zur Ausführung der selbstadaptierenden Operationen jedes selbstadaptierenden Transportunterzeitraums überwacht, nachdem die Transportkontrolleinheit (1512) die Drehung des Karussells gemäß des selbstadaptierenden Transportunterzeitraums überwacht.

10. Das System gemäß Anspruch 9, wobei die Transportkontrolleinheit (1512) überwacht, dass das Karussell während des selbstadaptierenden Transportunterzeitraums stationär bleibt, wenn die selbstadaptierende Kontrolleinheit (1514) feststellt, dass keine selbstadaptierende Operation gemäß des Zeiterfassungsbogens für Operationen zum nächsten selbstadaptierenden Transportunterzeitraum passt.

11. Das System gemäß Anspruch 9 oder 10, wobei die Transportkontrolleinheit (1512) den ersten Anteil an der Drehung berechnet, bevor die Rotation des Karussells in Bezug auf den regulären Transportunterzeitraum überwacht wird, wobei der erste Anteil an der Drehung im regulären Transportunterzeitraum einem Distanzunterschied zwischen einer aktuellen Position des Reaktionsbehälters und der Zielposition entlang einer Rotationsrichtung des Karussells entspricht, die Zielposition als eine Position nach der Rotation während eines vorbestimmten Rotationsintervalls ausgehend von der Referenzausrichtung definiert wird und die Transportkontrolleinheit (1512) den zweiten Anteil an der Drehung in Bezug auf den selbstadaptierenden Transportunterzeitraum vor der Überwachung der Rotation des Karussells und nach der Bestimmung der dem selbstadaptierenden Transportunterzeitraum entsprechenden selbstadaptierenden Operation berechnet, wobei der zweite Anteil an der Drehung im selbstadaptierenden Transportunterzeitraum einem Distanzunterschied zwischen einer aktuellen Position des von der selbstadaptierenden Operation betroffenen Reaktionsbehälters und der Positionskoordinaten der Ausführstation (R3), in der die selbstadaptierende Operation entlang der Rotationsrichtung des Karussells ausgeführt wird.

12. Das Analysesystem gemäß Anspruch 8-11, wobei der erste Anteil an der Drehung jedes regulären Transportunterzeitraums einem konstanten Inkrement entspricht.

13. Eine automatische Analysevorrichtung (100) mit:
einem Operationsmechanismus (140) für eine Inkubationseinheit (110), wobei die dem Operationsmechanismus (140) entsprechende Ausführstation (R1, R2, R3, R4) an einer Schnittstelle der Halterung des Reaktionsbehälters und einem Verfahrweg des Operationsmechanismus (140) oder an einer Schnittstelle der Halterung des Behälters und der Mittellinie des Operationsmechanismus (140) liegt; und
dem Analysesystem gemäß einem der Ansprüche 8-12.

## Revendications

1. Procédé d'analyse automatique d'un dispositif d'analyse automatique (100), **caractérisé par**, le dispositif d'analyse automatique (100) comprenant une unité d'incubation (110) comprenant un carrousel circulaire lequel comprend une pluralité d'éléments de maintien de récipient destinés à maintenir des récipients de réaction ; l'unité d'incubation (110) comprend en outre au moins une station d'exécution (R1, R2, R3, R4) sur une piste de transport du carrousel circulaire afin de réaliser des opérations sur les récipients de réaction, le procédé étant utilisé pour commander une rotation du carrousel et des opérations associées à l'unité d'incubation (110), les opérations comprenant une pluralité d'opérations régulières, dont la programmation ne dépend pas d'une durée d'incubation prédéterminée d'un récipient de réaction, et une pluralité d'opérations auto-adaptatives, dont la programmation dépend d'une durée d'incubation prédéterminée d'un récipient de réaction, où le procédé d'analyse comprend les étapes consistant à :
commander la rotation du carrousel sur une pluralité de périodes de transport prédéterminées, où chaque période de transport comprend au moins une sous-période de transport régulière lors de laquelle le carrousel est entraîné en rotation selon une première ampleur, et au moins une sous-période de transport auto-adaptative lors de laquelle le carrousel est entraîné en rotation selon une deuxième ampleur, la première ampleur de rotation de chaque sous-période de transport régulière est déterminée au moins par une orientation de référence et un intervalle de rotation prédéterminé, l'orientation de référence est définie comme une orientation initiale du carrousel pour la première période de transport, et pour les périodes de transport ultérieures, l'orientation de référence est définie comme une orientation d'arrêt où le carrousel s'arrête après la rotation pendant une sous-période de transport régulière correspondant à une sous-période de transport régulière de la précédente période de transport, où la deuxième ampleur de rotation de chaque sous-période de transport auto-adaptative est déterminée par une position actuelle d'un récipient de réaction nécessitant des opérations auto-adaptatives et la position d'une station d'exécution (R3) réalisant les opérations auto-adaptatives ;
exécuter l'opération régulière de la sous-période de transport régulière au cours d'une durée d'arrêt de la sous-période de transport régulière où le carrousel est arrêté après la première ampleur de rotation ; et
commander l'unité d'incubation (110) pour transporter un récipient de réaction nécessitant des opérations auto-adaptatives jusqu'à et l'arrêter au niveau de la station d'exécution (R3), la station d'exécution (R3) étant configurée pour exécuter les opérations auto-adaptatives de la sous-période de transport auto-adaptative et commander un mécanisme d'opération (140) de la station d'exécution (R3) pour exécuter les opérations auto-adaptatives.

2. Procédé selon la revendication 1, comprenant en outre
le fait de générer une feuille de temps d'opération d'échantillons à détecter et les opérations selon un nombre des échantillons à détecter et des éléments d'analyse entrés par un utilisateur ; ou bien, où la période de transport comprend deux sous-périodes de transport régulières, le carrousel est entraîné en rotation selon la même première ampleur lors de ces deux sous-périodes de transport régulières ou bien le carrousel est entraîné en rotation selon des premières ampleurs différentes lors de ces deux sous-périodes de transport régulières.

3. Procédé selon la revendication 2, dans lequel avant de commander la rotation du carrousel selon une certaine sous-période de transport régulière de la période de transport en cours, le procédé comprend en outre :
le fait de calculer la première ampleur de rotation de la sous-période de transport régulière, la première ampleur de rotation de la sous-période de transport régulière est une différence de distance définie entre la position actuelle du récipient de réaction et la position cible le long d'un sens de rotation du carrousel, la position cible est définie comme une position après la rotation du carrousel pour l'intervalle de rotation prédéterminé par rapport à l'orientation de référence ; et
le fait de trouver l'opération régulière correspondant à la sous-période de transport régulière ; et
le fait de commander la rotation du carrousel selon la sous-période de transport régulière de la période de transport en cours, comprenant : le fait de commander le carrousel pour l'arrêter après l'avoir entraîné en rotation selon la première ampleur et de commander le mécanisme d'opération (140) pour réaliser l'opération régulière trouvée après que le carrousel s'est arrêté.

4. Procédé selon l'une des revendications 1 à 3, dans lequel l'intervalle de rotation prédéterminé est un entier inférieur à un nombre total des éléments de maintien de récipient de réaction positionnés sur le carrousel, et l'entier ne peut pas être divisé de manière exacte par le nombre total des récipients de réaction.

5. Procédé selon la revendication 2 ou 3, dans lequel les opérations auto-adaptatives correspondent respectivement aux opérations auto-adaptatives pour les échantillons à détecter, et avant de commander la rotation du carrousel selon la sous-période de transport auto-adaptative de la période de transport en cours, le procédé comprend en outre :
le fait de déterminer s'il existe ou non une opération auto-adaptative correspondant à la sous-période de transport auto-adaptative et le temps d'opération de l'opération auto-adaptative correspondant à la sous-période de transport auto-adaptative, le fait de calculer la deuxième ampleur de rotation si l'opération auto-adaptative existe, la deuxième ampleur de rotation est calculée comme une différence de distance entre une position actuelle du récipient de réaction à traiter par l'opération auto-adaptative et la coordonnée de position de la station d'exécution (R3) où l'opération auto-adaptative est réalisée le long du sens de rotation du carrousel ;
le fait de commander la rotation du carrousel selon la sous-période de transport auto-adaptative de la période de transport en cours, comprenant : le fait de commander le carrousel pour l'arrêter après l'avoir entraîné en rotation selon la deuxième ampleur et de réaliser l'opération auto-adaptative lorsque le carrousel s'arrête ; et
le fait de commander le carrousel pour le maintenir stationnaire lors de la sous-période de transport auto-adaptative s'il n'existe pas d'opération auto-adaptative correspondant à la prochaine sous-période de transport auto-adaptative.

6. Procédé d'analyse automatique selon l'une quelconque des revendications 1 à 5, dans lequel la première ampleur de rotation de chaque sous-période de transport régulière est un incrément de pas constant ; et commander le carrousel pour l'entraîner en rotation puis l'arrêter au niveau d'une position d'arrêt d'incubation lors d'une précédente sous-période de transport régulière de la période de transport en cours.

7. Procédé selon la revendication 6, dans lequel la première ampleur de rotation est un entier inférieur à un nombre total des éléments de maintien de récipient de réaction positionnés sur le carrousel, et l'entier ne peut pas être divisé de manière exacte par le nombre total des récipients de réaction.

8. Système d'analyse d'un dispositif d'analyse automatique (100), **caractérisé par**, le dispositif d'analyse automatique (100) comprenant une unité d'incubation (110) comprenant un carrousel circulaire lequel comprend une pluralité d'éléments de maintien de récipient destinés à maintenir des récipients de réaction ; l'unité d'incubation (110) comprenant en outre au moins une station d'exécution (R1, R2, R3, R4) sur une piste de transport du carrousel circulaire afin de réaliser des opérations sur les récipients de réaction, le système d'analyse étant utilisé pour commander une rotation du carrousel et des opérations associées à l'unité d'incubation (110), les opérations comprenant une pluralité d'opérations régulières, dont la programmation ne dépend pas d'une durée d'incubation prédéterminée d'un récipient de réaction, et une pluralité d'opérations auto-adaptatives, dont la programmation dépend d'une durée d'incubation prédéterminée d'un récipient de réaction, où le système d'analyse comprend :
une unité de commande de transport (1512) qui commande la rotation du carrousel sur une pluralité de périodes de transport prédéterminées, où chaque période de transport comprend au moins une sous-période de transport régulière lors de laquelle le carrousel est entraîné en rotation selon une première ampleur, et au moins une sous-période de transport auto-adaptative lors de laquelle le carrousel est entraîné en rotation selon une deuxième ampleur, l'unité de commande de transport commande le carrousel pour l'entraîner en rotation selon la première ampleur puis pour l'arrêter, la première ampleur de rotation de chaque sous-période de transport régulière est déterminée au moins par une orientation de référence et un intervalle de rotation prédéterminé, l'orientation de référence est définie comme une orientation initiale du carrousel pour la première période de transport, et pour les périodes de transport ultérieures, l'orientation de référence est définie comme une orientation d'arrêt où le carrousel s'arrête après la rotation pendant une sous-période de transport régulière correspondant à une sous-période de transport régulière de la précédente période de transport, l'unité de commande de transport commande le carrousel pour l'entraîner en rotation selon la deuxième ampleur puis pour l'arrêter, où la deuxième ampleur de rotation de chaque sous-période de transport auto-adaptative est déterminée par une position actuelle d'un récipient de réaction nécessitant des opérations auto-adaptatives et la position d'une station d'exécution (R3) réalisant les opérations auto-adaptatives ;
une unité de commande d'opération régulière (1513) qui commande un mécanisme d'opération (140) de la station d'exécution (R1, R2, R4) pour réaliser les opérations régulières sur le récipient de réaction au cours d'une durée d'arrêt de la sous-période de transport régulière de la période de transport ; et
une unité de commande d'opération auto-adaptative (1514) qui commande un mécanisme d'opération (140) de la station d'exécution pour réaliser les opérations auto-adaptatives sur le récipient de réaction au cours d'une durée d'arrêt de la sous-période de transport auto-adaptative.

9. Système selon la revendication 8, dans lequel l'intervalle de rotation prédéterminé est un entier inférieur à un nombre total des éléments de maintien de récipient de réaction positionnés sur le carrousel et l'entier ne peut pas être divisé de manière exacte par le nombre total des récipients de réaction, le système comprend en outre :
une unité de génération de feuille de temps d'opération (1515) qui génère une feuille de temps d'opération concernant les opérations de chaque échantillon à détecter selon le nombre d'échantillons à détecter et des opérations d'analyse entrées par l'utilisateur ;
l'unité de commande d'opération régulière (1513) qui détermine le temps d'opération de l'opération régulière réalisée au cours de la durée d'arrêt régulière selon la feuille de temps d'opération, commande une rotation du carrousel selon la sous-période de transport régulière, et commande le mécanisme d'opération (140) pour réaliser l'opération régulière au cours de la sous-période de transport régulière ; et
l'unité de commande auto-adaptative (1514) qui détermine l'opération auto-adaptative dont le temps d'opération correspond à la sous-période de transport auto-adaptative selon la feuille de temps d'opération et commande le mécanisme d'opération (140) pour réaliser les opérations auto-adaptatives correspondant à chaque sous-période de transport auto-adaptative après que l'unité de commande de transport (1512) a commandé la rotation du carrousel selon la sous-période de transport auto-adaptative.

10. Système selon la revendication 9, dans lequel l'unité de commande de transport (1512) commande le carrousel pour le maintenir stationnaire lors de la sous-période de transport auto-adaptative si l'unité de commande auto-adaptative (1514) détermine qu'il n'existe pas d'opération auto-adaptative correspondant à la prochaine sous-période de transport auto-adaptative selon la feuille de temps d'opération.

11. Système selon la revendication 9 ou 10, dans lequel l'unité de commande de transport (1512) calcule la première ampleur de rotation avant de commander la rotation du carrousel selon la sous-période de transport régulière, la première ampleur de rotation de la sous-période de transport régulière est une différence de distance définie entre une position actuelle du récipient de réaction et la position cible le long d'un sens de rotation du carrousel, la position cible est définie comme une position après la rotation pour l'intervalle de rotation prédéterminé par rapport à l'orientation de référence, l'unité de commande de transport (1512) calcule la deuxième ampleur de rotation selon la sous-période de transport auto-adaptative avant de commander la rotation du carrousel et après que l'unité de commande d'opération auto-adaptative a déterminé l'opération auto-adaptative correspondant à la sous-période de transport auto-adaptative, la deuxième ampleur de rotation de la sous-période de transport auto-adaptative est calculée comme une différence de distance entre une position actuelle du récipient de réaction à traiter par l'opération auto-adaptative et la coordonnée de position de la station d'exécution (R3) où l'opération auto-adaptative est réalisée le long du sens de rotation du carrousel.

12. Système d'analyse selon les revendications 8 à 11, dans lequel la première ampleur de rotation de chaque sous-période de transport régulière est un incrément de pas constant.

13. Dispositif d'analyse automatique (100) comprenant :
un mécanisme d'opération (140) positionné autour de l'unité d'incubation (110), où la station d'exécution (R1, R2, R3, R4) correspondant au mécanisme d'opération (140) est définie au niveau d'une intersection de l'élément de maintien de récipient de réaction et une piste de déplacement du mécanisme d'opération (140) ou au niveau d'une intersection de l'élément de maintien de récipient et un axe central du mécanisme d'opération (140) ; et
le système d'analyse selon l'une quelconque des revendications 8 à 12.
